# FASCICULE DE BREVET EUROPEEN

(11) **EP 2 855 276 B1**
(45) Date de publication et mention de la délivrance du brevet: **13.02.2019**
(21) Numéro de dépôt: 13730021.6
(22) Date de dépôt: 03.06.2013
(51) Int. Cl.: B64G 1/24, B64G 1/26, B64G 1/40, F02K 9/76

(54) **ENGIN SPATIAL EQUIPE D'UN DISPOSITIF DE DESORBITATION COMPRENANT UN MOTEUR A DETONATION**
RAUMFAHRZEUG AUSGESTATTET MIT EINER DEORBIT-VORRICHTUNG MIT EINEM DETONATIONSMOTOR
SPACECRAFT EQUIPPED WITH A DEORBITING DEVICE COMPRISING A DETONATION ENGINE

(30) Priorité: 05.06.2012 FR 1255215
(43) Date de publication de la demande: 08.04.2015
(73) Titulaire: ARIANEGROUP SAS, 75015 Paris (FR)
(72) Inventeur: SOULIER, Nicolas, 27600 Fontaine Bellenger (FR); VICENTINI, Maxime, 17139 Dompierre sur Mer (FR); CONRARDY, Jean-Marie, 27940 Courcelle sur Seine (FR)
(74) Mandataire: Milien, Jean-Baptiste Aurélien
(86) Numéro de dépôt international: PCT/FR2013/051247
(87) Numéro de publication internationale: WO 2013/182795

(56) Documents cités:
- EP-A1- 1 852 350
- FR-A1- 2 732 308
- GB-A- 2 468 515
- US-A1- 2006 201 134
- D. M. Davidenko, F. Jouot, A. N. Kudryavtsev, G. Dupré, I. Gökalp, E. Daniau and F. Falempin: "Continuous detonation wave engine studies for space application", Progress in Propulsion Physics , vol. 1 2009, pages 353-366, XP002692603, DOI: 10.1051/eucass/200901353 Extrait de l'Internet: URL:http://www.eucass-proceedings.eu/index .php?option=com_article&access=doi&doi=10. 1051/eucass/200901353&Itemid=129 [extrait le 2013-02-21]

## Description

### DOMAINE DE L'INVENTION

L'invention concerne un engin spatial équipé d'un dispositif de désorbitation, un lanceur spatial comprenant un tel engin spatial, et un procédé de désorbitation d'un tel engin spatial.

### ETAT DE LA TECHNIQUE ANTERIEURE

Pour ne pas polluer ni encombrer les orbites spatiales, il est nécessaire de désorbiter les engins spatiaux après leurs utilisations. En d'autres termes, il faut écarter les engins spatiaux de leur orbite après leurs utilisations pour que ceux-ci rejoignent l'atmosphère terrestre et retombe sur la Terre, généralement en se désintégrant. On s'assure ainsi que l'orbite sur laquelle les engins spatiaux ont été initialement placés n'est pas polluée, et que de nouveaux engins spatiaux qui y seront placés ultérieurement ne verront pas leurs fonctionnements perturbés par ou n'entreront pas en collision avec un ancien engin spatial qui n'est plus utilisé.

Il n'est généralement pas possible d'utiliser le moteur principal de l'engin spatial pour désorbiter l'engin spatial car la pression de l'ergol résiduel au sein du réservoir principal d'ergol est trop faible pour faire fonctionner le moteur principal, la majorité de l'ergol ayant été consommé par le moteur principal pour amener l'engin spatial sur ladite orbite de sorte que la pression au sein du réservoir principal d'ergol a significativement diminuée et ne permet plus d'alimenter correctement le moteur principal en ergol. En effet, les moteurs principaux classiques demandent une alimentation d'ergol sous une pression minimale (de l'ordre de quelques dizaines de bars) pour pouvoir fonctionner.

Par ailleurs, on connait des dispositifs de désorbitations sous forme de dispositifs annexes rajoutés sur un engin spatial. Cependant, ces dispositifs de désorbitation classiques présentent leur propre réservoir d'ergol et sont donc généralement lourds, ce qui pénalise les performances de l'engin spatial.

FR 2 732 308 divulgue un procédé d'utilisation du système propulsif d'un satellite artificiel pour la déorbitation, EP 1 852 350 divulgue un procédé de contrôle d'un satellite géostationnaire et un système de contrôle pour satellite pour effectuer ledit procédé, US 2006/0201134 divulgue un moteur à détonation pulsée pour un système de contrôle d'attitude, GB 2 468 515 divulgue un moteur à détonation continue à poussée contrôlable tandis que D.M. Davidenko, F. Jouot, A.N. Kudryavtsev, G. Dupré, I. Gökalp, E. Daniau and F. Falempin : « Continuous detonation wave engine studies for space application », Progress in Propulsion Physics, vol.1 2009, pages 353-366, XP002692603, DOI : 10.1051/eucass/200901353 est relatif aux moteurs à détonation à onde continue.

### PRESENTATION DE L'INVENTION

Le but de la présente invention est de remédier au moins substantiellement aux inconvénients mentionnés ci-dessus.

L'invention atteint son but en proposant un engin spatial comprenant au moins un réservoir principal d'ergol, un moteur principal alimenté en ergol par le réservoir principal, et un dispositif de désorbitation, le dispositif de désorbitation comprenant un moteur à détonation alimenté en ergol par le réservoir principal.

On comprend que le terme « engin spatial » désigne tout engin destiné à être envoyé dans l'espace. Ce terme désigne notamment, mais pas uniquement, un étage de lanceur spatial, un lanceur spatial comprenant un seul étage, une navette spatiale, un satellite ou équivalent.

Le moteur principal est le moteur destiné à amener l'engin spatial dans l'espace, ou sur une orbite prédéterminée. Le réservoir principal est le réservoir qui est destiné à contenir l'ergol pour alimenter le moteur principal. Bien entendu, il y a un ou plusieurs réservoirs d'ergol, selon que le moteur principal et le moteur à détonation fonctionnent avec un seul ergol ou un mélange de plusieurs ergols. Par la suite, et sauf indication contraire, le terme générique « ergol » désigne indifféremment l'ergol ou les ergols nécessaire(s) au fonctionnement du moteur principal. La majeure partie (environ 95% ou plus) de l'ergol contenu dans le réservoir principal est consommée par le moteur principal lors de la poussée principale amenant l'engin spatial dans l'espace ou sur une orbite prédéterminée. L'ergol restant après la poussée principale est appelé « ergol résiduel ». La pression initiale régnant au sein du réservoir principal a chuté lors de l'utilisation de l'ergol pendant la poussée principale par le moteur principal, de sorte que l'ergol résiduel est à faible pression dans le réservoir principal. Par la suite, le terme « poussée principale » désigne une poussée effectuée par le moteur principal pour amener un engin spatial dans l'espace, ou vers une orbite prédéterminée.

Un moteur à détonation est un moteur connu par ailleurs qui ne nécessite pas une alimentation en ergol sous une grande pression (une pression de quelques bars suffit, par exemple 3 à 5 bars). Il est donc possible d'utiliser l'ergol résiduel à faible pression présent dans le réservoir principal pour alimenter le moteur à détonation. Le dispositif de désorbitation selon l'invention ne nécessite donc pas de réservoir d'ergol dédié, et est donc plus léger que les dispositifs de désorbitation classiques. Par ailleurs ce dispositif de désorbitation présente l'avantage d'utiliser la quasi-totalité de l'ergol résiduel dans le réservoir principal. Ainsi, la quasi-totalité de l'ergol embarqué est utilisé, ce qui présente un avantage tant du point de vue économique qu'écologique.

Pour rappel, un moteur à détonation est un moteur dont la vitesse de propagation de l'onde de combustion est supérieure ou égale à la vitesse du son. La détonation est un mode de combustion qui se caractérise par un fort couplage entre les ondes de choc et les zones de réaction chimique (combustion). Ces ondes de choc amorcent elles-mêmes les réactions chimiques en comprimant le milieu jusqu'à atteindre des pressions et des températures dépassant les conditions d'auto-inflammation (point d'auto ignition) de l'ergol. La pression moyenne régnant dans la chambre de combustion peut être plus de dix fois plus importante que la pression initiale de l'ergol (de l'ordre de quelques bars, par exemple entre 3 et 8 bars). Enfin la détente des gaz de combustion dans une tuyère divergente ou dans un « aerospike » permet de générer une poussée suffisante pour désorbiter un engin spatial.

Avantageusement, le moteur à détonation comprend un chauffage pour chauffer l'ergol de sorte que l'ergol passe d'une phase solide ou liquide à une phase gazeuse en amont d'un dispositif d'injection.

En faisant passer l'ergol en phase gazeuse, l'ergol est mieux adapté à la détonation. Dans le cas où le moteur a détonation est alimenté avec plusieurs ergols, le chauffage peut chauffer un seul, plusieurs ou tous les ergols.

Avantageusement, le moteur à détonation comprend une chambre de combustion et un circuit de refroidissement de la chambre de combustion, le chauffage comprenant le circuit de refroidissement.

En d'autres termes, le circuit de refroidissement fait partie du chauffage. On comprend donc que l'ergol circule du réservoir principal vers le dispositif d'injection en passant par le circuit de refroidissement. En refroidissant la chambre de combustion, l'ergol se réchauffe. On obtient ainsi deux effets complémentaires : d'une part on refroidit la chambre de combustion, ce qui permet de la maintenir à une température de fonctionnement prédéterminée, et d'autre part on chauffe l'ergol pour préparer la détonation.

Avantageusement, le moteur à détonation est disposé à l'opposé du moteur principal par rapport au réservoir principal.

En disposant ainsi le moteur à détonation et le moteur principal, on facilite le freinage de l'engin spatial. En effet, le moteur à détonation est ainsi orienté de sorte que la poussé qu'il génère est orientée dans le sens contraire de la poussée qui a été générée par le moteur principal (et donc dans le sens contraire du mouvement résultant de l'engin spatial). On comprend qu'en conditions normales d'utilisation le dispositif de désorbitation est arrêté lorsque le moteur principal fonctionne tandis que le dispositif de désorbitation fonctionne lorsque le moteur principal est arrêté.

Avantageusement, l'engin spatial selon l'invention comprend deux réservoirs principaux, à savoir un réservoir de carburant et un réservoir de comburant, le moteur principal et le moteur à détonation étant chacun reliés aux deux réservoirs principaux.

Par exemple, le carburant est de l'hydrogène liquide tandis que le comburant est de l'oxygène liquide.

Préférentiellement, le moteur principal est un moteur à déflagration.

Un moteur à déflagration est un moteur classique utilisé pour la poussée principale des engins spatiaux. Pour rappel, un moteur à déflagration est un moteur dont la vitesse de propagation de l'onde de combustion est inférieure à la vitesse du son. Un tel moteur demande à être alimenté en ergol(s) à une pression minimale de l'ordre de quelques dizaines de bars, préférentiellement à une pression comprise entre 100 et 130 bars.

On notera que structurellement, un moteur à détonation diffère d'un moteur à déflagration notamment en ce qu'il présente un pré-détonateur pour l'allumage. Par exemple, un pré-détonateur comprend un circuit dérivé d'alimentation et une bougie d'allumage. Un moteur à déflagration ne présente pas de pré-détonateur.

Lors de la poussée principale par le moteur à déflagration, la pression initiale de l'ergol comprise entre 100 et 130 bars diminue jusqu'à une pression de l'ordre d'une dizaine de bars ou moins, pression qui n'est plus suffisante pour faire fonctionner le moteur principal à déflagration. Lorsque le moteur principal s'arrête, l'ergol résiduel est donc à une pression inférieure ou égale à 10 bars. La pression de cet ergol résiduel est néanmoins suffisante pour faire fonctionner le moteur à détonation du dispositif de désorbitation.

Selon une première variante, le moteur à détonation est un moteur à détonation continue rotative.

Les moteurs à détonation continue rotative sont connus par ailleurs. Pour rappel, dans un moteur à détonation continue rotative la chambre de combustion est annulaire, et le front d'onde de combustion est local et se déplace azimutalement dans la chambre de combustion annulaire. Il faut simplement initier à l'aide d'un pré-détonateur la détonation initiale qui se propage par la suite selon la direction azimutale, dans un sens ou dans l'autre. Au niveau de l'injection, des phases de compression et de détente se répètent alternativement de façon autonome. En effet, une onde de détente suit l'onde de détonation (ou onde de compression) cette onde de détente « aspirant » ainsi l'ergol nécessaire à la détonation lors du prochain passage du front d'onde de détonation. On peut également initier plusieurs détonations, qui génèrent plusieurs fronts d'onde de détonation successifs.

On notera que structurellement, un moteur à détonation continue rotative, diffère d'un moteur à déflagration notamment en ce qu'à l'intérieur de la chambre de combustion, un noyau (ou élément central) définit avec les parois latérales un espace annulaire. Un moteur à déflagration ne présente pas de noyau dans la chambre de combustion.

Selon une deuxième variante, le moteur à détonation est un moteur à détonation puisée.

Les moteurs à détonation pulsée sont connus par ailleurs. Pour rappel, dans un moteur à détonation pulsée la chambre de combustion présente une forme cylindrique classique, fermée du côté de l'injection, ouverte du côté opposé. L'ergol est injecté dans la chambre de combustion. Un pré-détonateur initie la détonation. Lorsque la détonation est finie, on injecte de nouveau de l'ergol et on initie une nouvelle détonation à l'aide du pré-détonateur. Contrairement à un moteur à détonation continue rotative dans lequel la détonation est continue, la détonation dans un moteur à détonation pulsée n'est pas continue et doit être ré-initiée à chaque fois.

L'invention concerne également un lanceur spatial comprenant au moins un étage formé par un engin spatial selon l'invention.

Avantageusement, ledit au moins un étage est le dernier et/ou l'avant dernier étage du lanceur spatial.

Les premiers étages d'un lanceur spatial sont largués lorsque le lanceur spatial est encore suffisamment proche de la Terre, de sorte que le champ gravitationnel de la Terre fait chuter immédiatement ces premiers étages qui ne peuvent donc par rester en orbite. Par contre, l'avant dernier étage et/ou le dernier étage du lanceur spatial sont largués lorsque le lanceur spatial est déjà dans l'espace, trop éloigné du champ gravitationnel terrestre pour faire chuter immédiatement ces étages vers la Terre. Ainsi, le dernier et/ou l'avant dernier étage du lanceur est/sont équipé(s) d'un dispositif de désorbitation selon l'invention pour pourvoir les écarter de l'orbite qu'ils atteignent et les ramener dans l'atmosphère terrestre et le(s) faire chuter sur la Terre.

L'invention concerne également un procédé de désorbitation d'un engin spatial selon l'invention, dans lequel ladite désorbitation est effectuée par ledit dispositif de désorbitation après que ledit moteur principal soit arrêté, le moteur à détonation du dispositif de désorbitation étant alimenté en ergol par le réservoir principal à une pression inférieure ou égale à 10 (dix) bars.

On comprend que pour amener l'engin spatial sur son orbite, le moteur principal a consommé la majorité de l'ergol, de sorte que la pression dans le ou les réservoirs principaux est inférieure ou égale à 10 bars. Lorsque le moteur principal est arrêté, on peut utiliser le dispositif de désorbitation et désorbiter l'engin spatial.

Avantageusement, lorsque l'engin spatial est un étage de lanceur spatial, on sépare ledit étage du lanceur spatial après avoir arrêté le moteur principal et avant d'effectuer la désorbitation.

On s'assure ainsi que la désorbitation de l'étage n'a aucun impact sur le lanceur spatial.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux figures annexées, sur lesquelles :
- la figure 1 représente un lanceur spatial selon l'invention,
- la figure 2 représente un engin spatial selon l'invention formant le dernier étage du lanceur spatial de la figure 1, et
- le figure 3 représente la chambre de combustion du moteur à détonation de l'engin spatial de la figure 2.

### DESCRIPTION DETAILLEE D'EXEMPLES DE REALISATION

On notera que les figures sont très schématiques, leur but étant de représenter le plus simplement et le plus clairement possible la structure générale d'un lanceur spatial et d'un engin spatial selon l'invention.

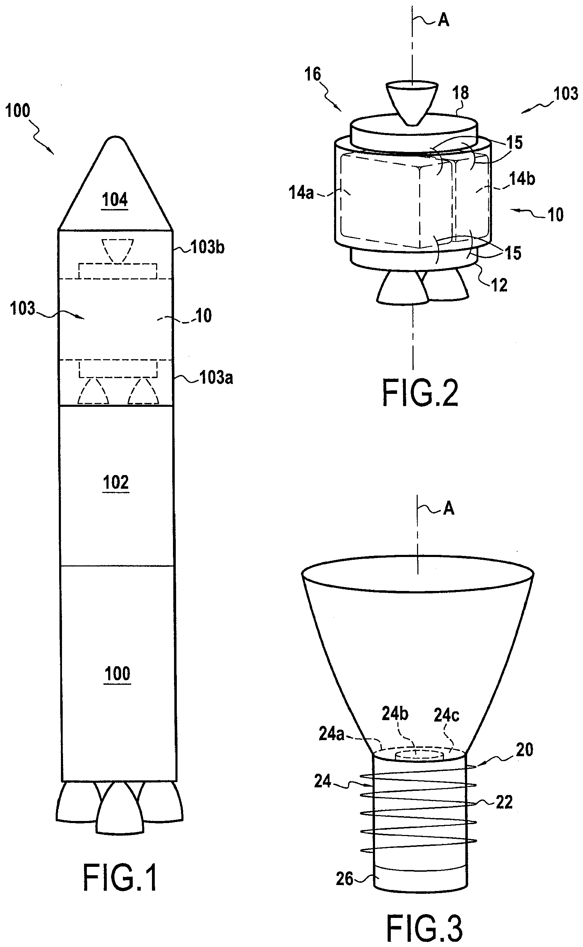

La figure 1 représente un lanceur spatial 100 comprenant trois étages, à savoir un premier étage 101, un deuxième étage 102, un troisième et un dernier étage 103, et un logement 104 pour loger une charge à transporter dans l'espace, par exemple un satellite.

Le troisième et dernier étage 103 est formé par un engin spatial 10 et comprend deux viroles 103a et 103b assurant la continuité géométrique de la forme extérieure du lanceur spatial 100 lorsque le troisième étage est solidaire du deuxième étage 102 et/ou du logement 104.

La figure 2 représente l'engin spatial 10 formant le dernier étage 103 du lanceur spatial 100 de la figure 1. L'engin spatial 10 comprend un moteur principal 12 à déflagration, deux réservoirs principaux d'ergol 14a et 14b et un dispositif de désorbitation 16 comprenant un moteur à déflagration 18.

Les réservoirs principaux 14a et 14b contiennent respectivement un carburant, par exemple de l'hydrogène, et un comburant, par exemple de l'oxygène, sous pression et à l'état liquide. Des conduites 15 relient les réservoirs principaux 14a et 14b au moteur principal 12 et au moteur à détonation 18, pour les alimenter en ergols.

Le moteur à détonation 18 est disposé par rapport aux réservoirs principaux 14a et 14b, à l'opposé du moteur principal 12. Plus précisément, l'engin spatial 10 s'étend selon une direction axiale A, le moteur principal 12 et le moteur à détonation 18 étant disposés le long de cette direction axiale A, de part et d'autre des réservoirs principaux 14a et 14b.

Comme représenté sur la figure 3, le moteur à détonation 18 comprend un chauffage 20 comprenant un circuit de refroidissement 22 sous forme de serpentin qui s'enroule autour de la chambre de combustion 24, pour maintenir la chambre de combustion 24 à une température prédéterminée et pour réchauffer les ergols. Les ergols ainsi chauffés sont amenés vers le dispositif d'injection 26, disposé en amont (dans le sens de l'écoulement des ergols) de la chambre de combustion 24. Dans ce mode de réalisation le carburant et le comburant circulent dans le circuit de refroidissement 22 (bien entendu en étant séparés, chaque ergol circulant dans un serpentin distinct - un seul serpentin étant représenté sur la figure 3). Selon une variante seul le carburant ou seul le comburant circule dans le circuit de refroidissement.

Dans cet exemple, le moteur à détonation 18 est un moteur à détonation continue rotative. Ainsi, la chambre de combustion 24 présente une paroi extérieure 24a et un noyau 24b, l'espace annulaire 24c ménagé entre la paroi extérieur 24 et le noyau 24b formant la cavité où a ou les ondes de détonation se propagent selon la direction azimutale.

En se référant à la figure 1, on comprend que lorsque le deuxième étage 102 est largué pendant le vol du lanceur spatial 100, la virole 103a est également larguée. Le moteur principal 12 du troisième étage 106 est alors allumé, et déplace l'ensemble formé par le troisième étage 103 et le logement 104 et opère sa poussée principale pour amener ledit ensemble dans l'espace ou sur une orbite prédéterminée. Lorsque la poussée principale du moteur principal 12 est achevée, le moteur principal 12 est arrêté. Au cours de cette poussée principale, la majeure partie de l'hydrogène et de l'oxygène contenus dans les réservoirs principaux 14a et 14b est consommée et la pression initiale au sein des réservoirs principaux a chuté à une pression inférieure ou égale à 10 bars. Le troisième étage 103 et le logement 104 sont alors séparés. Pendant cette séparation, la virole 103b est également séparée de l'engin spatial 10. Après cette séparation, le dispositif de désorbitation 16 est alors activé et éloigne l'engin spatial 10 du logement 104 du lanceur d'engin 100 en allumant le moteur à détonation 18, ce dernier étant alimenté en oxygène et en hydrogène résiduels à basse pression contenus dans les réservoirs principaux 14a et 14b.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation/variantes illustrés/mentionnés peuvent être combinées dans des modes de réalisation additionnels. Par conséquent, la description et les dessins doivent être considérés dans un sens illustratif plutôt que restrictif. Par exemple, le deuxième étage 102 et/ou le premier étage 101 peuvent être formés par un engin spatial similaire à l'engin spatial 10. Par ailleurs le moteur à détonation 18 de l'engin spatial 10 peut être un moteur à détonation pulsée plutôt qu'un moteur à détonation continue rotative.

## Revendications

1. Engin spatial (10) comprenant au moins un réservoir principal d'ergol (14a, 14b), un moteur principal (12) alimenté en ergol par le réservoir principal (14a, 14b), et un dispositif de désorbitation (16), **caractérisé en ce que** le dispositif de désorbitation (16) comprend un moteur à détonation (18) alimenté en ergol par le réservoir principal (14a, 14b).

2. Engin spatial (10) selon la revendication 1, dans lequel le moteur à détonation (18) comprend un chauffage (20) pour chauffer l'ergol de sorte que l'ergol passe d'une phase solide ou liquide à une phase gazeuse en amont d'un dispositif d'injection (26).

3. Engin spatial (10) selon la revendication 2, dans lequel le moteur à détonation (18) comprend une chambre de combustion (24) et un circuit de refroidissement (22) de la chambre de combustion (24), le chauffage (20) comprenant le circuit de refroidissement (22).

4. Engin spatial (10) selon l'une quelconque des revendications 1 à 3, dans lequel le moteur à détonation (18) est disposé à l'opposé du moteur principal (12) par rapport au réservoir principal (14a, 14b).

5. Engin spatial (10) selon l'une quelconque des revendications 1 à 4, comprenant deux réservoirs principaux, à savoir un réservoir de carburant (14a) et un réservoir de comburant (14b), le moteur principal (12) et le moteur à détonation (18) étant chacun reliés aux deux réservoirs principaux (14a, 14b).

6. Engin spatial (10) selon l'une quelconque des revendications 1 à 5, dans lequel le moteur principal (12) est un moteur à déflagration.

7. Engin spatial (10) selon l'une quelconque des revendications 1 à 6, dans lequel le moteur à détonation (18) est un moteur à détonation continue rotative.

8. Engin spatial (10) selon l'une quelconque des revendications 1 à 6, dans lequel le moteur à détonation (18) est un moteur à détonation pulsée.

9. Lanceur spatial (100) comprenant au moins un étage (103) formé par un engin spatial (10) selon l'une quelconque des revendications 1 à 8.

10. Lanceur spatial (100) selon la revendication 9, dans laquelle ledit au moins un étage (103) est le dernier et/ou l'avant dernier étage du lanceur spatial (100).

11. Procédé de désorbitation d'un engin spatial (10) selon l'une quelconque des revendications 1 à 8, **caractérisé en ce que** ladite désorbitation est effectuée par ledit dispositif de désorbitation (16) après que ledit moteur principal (12) soit arrêté, le moteur à détonation (18) du dispositif de désorbitation (16) étant alimenté en ergol par le réservoir principal (14a, 14b) à une pression inférieure ou égale à 10 bars.

12. Procédé de désorbitation d'un engin spatial (10) formant un étage (103) d'un lanceur spatial (100) selon la revendication 9 ou 10, dans lequel on sépare ledit étage (103) du lanceur spatial (100) après avoir arrêté le moteur principal (12) et avant d'effectuer la désorbitation.

## Patentansprüche

1. Raumfahrzeug (10), umfassend wenigstens einen Haupttreibstofftank (14a, 14b), einen Hauptmotor (12), der von dem Haupttreibstofftank (14a, 14b) mit Treibstoff versorgt wird, und eine Deorbiting-Vorrichtung (16), **dadurch gekennzeichnet, dass** die Deorbiting-Vorrichtung (16) einen Explosionsmotor (18) umfasst, der von dem Hauttank (14a, 14b) mit Treibstoff versorgt wird.

2. Raumfahrzeug (10) nach Anspruch 1, wobei der Explosionsmotor (18) eine Heizeinrichtung (20) umfasst, um den Treibstoff derart zu erhitzen, dass der Treibstoff stromaufwärts einer Einspritzvorrichtung (26) von einer festen oder flüssigen Phase in eine gasförmige Phase übergeht.

3. Raumfahrzeug (10) nach Anspruch 2, wobei der Explosionsmotor (18) eine Brennkammer (24) und einen Kühlkreislauf (22) der Brennkammer (24) umfasst, wobei die Heizeinrichtung (20) den Kühlkreislauf (22) umfasst.

4. Raumfahrzeug (10) nach einem der Ansprüche 1 bis 3, wobei der Explosionsmotor (18) bezogen auf den Haupttank (14a, 14b) gegenüber dem Hauptmotor (12) angeordnet ist.

5. Raumfahrzeug (10) nach einem der Ansprüche 1 bis 4, umfassend zwei Haupttanks, nämlich einen Treibstofftank (14a) und einen Oxidationsmitteltank (14b), wobei der Hauptmotor (12) und der Explosionsmotor (18) jeweils mit den beiden Haupttanks (14a, 14b) verbunden sind.

6. Raumfahrzeug (10) nach einem der Ansprüche 1 bis 5, wobei der Hauptmotor (12) ein Deflagrationsmotor ist.

7. Raumfahrzeug (10) nach einem der Ansprüche 1 bis 6, wobei der Explosionsmotor (18) ein Motor mit kontinuierlich umlaufender Explosion ist.

8. Raumfahrzeug (10) nach einem der Ansprüche 1 bis 6, wobei der Explosionsmotor (18) ein Impulsexplosionsmotor ist.

9. Trägerrakete (100), umfassend mindestens eine Stufe (103), die von einem Raumfahrzeug (10) nach einem der Ansprüche 1 bis 8 gebildet wird.

10. Trägerrakete (100) nach Anspruch 9, wobei die mindestens eine Stufe (103) die letzte und/oder vorletzte Stufe der Trägerrakete (100) ist.

11. Deorbiting-Verfahren eines Raumfahrzeugs (10) nach einem der Ansprüche 1 bis 8, **dadurch gekennzeichnet, dass** das Deorbiting von der Deorbiting-Vorrichtung (16) durchgeführt wird, nachdem der Hauptmotor (12) gestoppt wurde, wobei der Explosionsmotor (18) der Deorbiting-Vorrichtung (16) mit Treibstoff von dem Haupttank (14a, 14b) mit einem Druck von kleiner oder gleich 10 bar versorgt wird.

12. Deorbiting-Verfahren eines Raumfahrzeugs (10), das eine Stufe (103) einer Trägerrakete (100) nach Anspruch 9 oder 10 bildet, wobei die Stufe (103) von der Trägerrakete (100) getrennt wird, nachdem der Hauptmotor (12) gestoppt wurde und bevor das Deorbiting durchgeführt wird.

## Claims

1. A spacecraft (10) having at least one main propellant tank (14a, 14b), a main engine (12) fed with propellant by the main tank (14a, 14b), and a de-orbiting device (16), the spacecraft being **characterized in that** the de-orbiting device (16) comprises a detonation engine (18) fed with propellant by the main tank (14a, 14b).

2. A spacecraft (10) according to claim 1, wherein the detonation engine (18) includes a heater (20) for heating the propellant such that the propellant passes from a solid or liquid phase to a gaseous phase upstream from an injector device (26).

3. A spacecraft (10) according to claim 2, wherein the detonation engine (18) includes a combustion chamber (24) and a cooling circuit (22) for cooling the combustion chamber (24), the heater (20) including the cooling circuit (22).

4. A spacecraft (10) according to any one of claims 1 to 3, wherein the detonation engine (18) is arranged opposite from the main engine (12) relative to the main tank (14a, 14b).

5. A spacecraft (10) according to any one of claims 1 to 4, having two main tanks, namely a fuel tank (14a) and an oxidizer tank (14b), the main engine (12) and the detonation engine (18) each being connected to both main tanks (14a, 14b).

6. A spacecraft (10) according to any one of claims 1 to 5, wherein the main engine (12) is a deflagration engine.

7. A spacecraft (10) according to any one of claims 1 to 6, wherein the detonation engine (18) is a continuous rotating detonation engine.

8. A spacecraft (10) according to any one of claims 1 to 6, wherein the detonation engine (18) is a pulse detonation engine.

9. A space launcher (100) comprising at least one stage (103) formed by a spacecraft (10) according to any one of claims 1 to 8.

10. A space launcher (100) according to claim 9, wherein said at least one stage (103) is the last and/or last-but-one stage of the space launcher (100).

11. A method of de-orbiting a spacecraft (10) according to any one of claims 1 to 8, the method being **characterized in that** said de-orbiting is performed by said de-orbiting device (16) after said main engine (12) has stopped, the detonation engine (18) of the de-orbiting device (16) being fed with propellant by the main tank (14a, 14b) at a pressure that is less than or equal to 10 bars.

12. A method of de-orbiting a spacecraft (10) forming a stage (103) of a space launcher (100) according to claim 9 or claim 10, wherein said stage (103) is separated from the space launcher (100) after stopping the main engine (12) and before performing de-orbiting.
